# FASCICULE DE BREVET EUROPEEN

(11) **EP 2 143 776 B1**
(45) Date de publication et mention de la délivrance du brevet: **13.04.2011**
(21) Numéro de dépôt: 09163407.1
(22) Date de dépôt: 22.06.2009
(51) Int. Cl.: C09K 11/78, C09D 5/22, C09D 7/12, C09D 11/00

(54) **Dispersions de particules d'oxydes de terres rares luminescents, vernis comprenant ces particules, leurs procédés de préparation et procédé de marquage de substrats**
Dispersionen von lumineszenten Seltenerd-Oxidteilchen, Lack, der diese Teilchen enthält, ihr Herstellungsverfahren und Markierverfahren der Substrate
Dispersions of luminescent rare earth oxide particles, varnish comprising these particles, method for preparing them and method for marking substrates

(30) Priorité: 25.06.2008 FR 0854243
(43) Date de publication de la demande: 13.01.2010
(73) Titulaire: Commissariat à l'Énergie Atomique et aux Énergies Alternatives, 75015 Paris (FR)
(72) Inventeur: Samuel, Jorice, 38220 Vizille (FR); Poncelet, Olivier, 38000 Grenoble (FR); Raccurt, Olivier, 38730 Chelieu (FR)
(74) Mandataire: Augarde, Eric

(56) Documents cités:
- EP-A- 1 884 554
- WO-A-2005/051846
- WO-A-2005/113705
- WO-A-2006/069028
- WO-A-2007/085650

## Description

### DOMAINE TECHNIQUE

L'invention concerne des dispersions de particules d'oxydes de terres rares luminescents.

Plus précisément, l'invention a trait à des dispersions de particules d'oxydes de terres rares désagglomérées et stabilisées dans un milieu liquide hydrophobe.

L'invention a trait en outre aux vernis comprenant lesdites particules

L'invention concerne également les procédés de préparation de ces dispersions et vernis.

L'invention a enfin trait à un procédé de marquage de substrats utilisant lesdits vernis, aux substrats pourvus des marquages ainsi obtenus, et à un procédé d'identification d'objets utilisant ces vernis et marquages.

### ÉTAT DE LA TECHNIQUE ANTÉRIEURE

Le domaine technique de l'invention peut être défini, de manière générale comme celui du marquage d'objets, produits, articles par des composés luminescents notamment à des fins de traçabilité et de lutte contre la contrefaçon.

Des procédés visant à identifier des articles manufacturés, et notamment des articles textiles afin de lutter contre la contrefaçon de ces articles existent déjà.

Ces procédés mettent notamment en oeuvre des marques visuelles telles que les hologrammes ou bien des marques magnétiques.

Ce type de marque ne peut être mis en oeuvre qu'avant utilisation de l'article, ne concerne pas l'article en tant que tel, et est généralement solidaire de ses étiquettes et/ou de son emballage. Ce type de marque ne peut donc être mis en oeuvre lorsque l'article est déjà en usage, débarrassé de ses étiquettes et/ou de son emballage.

C'est la raison pour laquelle il a été proposé d'utiliser des composés luminescents par exemple sous la forme de particules pour le marquage d'articles. Ces composés assurent un marquage homogène, dans la masse de l'article et même lorsque celui-ci est en usage. La marque fait partie intégrante de l'article et n'est pas éliminée lorsqu'on le déballe ou qu'on enlève l'étiquette.

Le marqueur est en outre invisible à l'oeil nu, et n'est révélé que par une excitation lumineuse spécifique et déterminée telle qu'une excitation UV, laser, etc.

Ainsi le document EP-A-0169750 [1] est relatif à la préparation de fibres, fils de sécurité, matières textiles luminescents dans lesquels des chélates luminescents de terres rares sont introduits dans ces matières postérieurement à leur fabrication, par un procédé de teinture. Le milieu de teinture est un bain renfermant une combinaison d'un ou plusieurs solvants dans lesquels les chélates de terres rares sont solubles, et un ou des diluants dans lesquels les chélates de terres rares sont insolubles. Ce procédé est assez long, et nécessite une étape supplémentaire de teinture en fin de chaîne de production.

Le document wO-A2-2005/051846 [2] décrit un procédé de préparation d'une poudre monophasée ou polyphasée, éventuellement sous forme de suspension colloïdale, de sesquioxyde, oxyhydroxyde, hydroxyde de terre, ou oxyde mixte de terre rare dans lequel on dissout des précurseurs de la terre rare, qui sont en majorité des nitrates de terres rares, dans un solvant organique polaire choisi parmi les alcools, de préférence les polyols, les glycines et les huiles en présence de la quantité d'eau au moins nécessaire pour la formation dudit sesquioxyde, oxyhydroxyde, hydroxyde ou oxyde mixte ; on chauffe la solution ainsi obtenue pendant un temps suffisant pour obtenir la précipitation d'une poudre de sesquioxyde, oxyhydroxyde, hydroxyde ou oxyde mixte sous la forme de particules nanostructurées, submicroniques d'un diamètre moyen de 20 à 800 nm ; on sépare éventuellement la poudre obtenue du solvant organique polaire, on redisperse éventuellement la poudre obtenue dans un solvant approprié, par exemple de type alcool, éther, acétone ou eau.

Cette redispersion peut être facilitée par l'ajout de composés dispersants chimiques ou par agitation mécanique ou ultrasonique. La dispersion obtenue dans ce document n'est pas une dispersion désagglomérée et stabilisée. Les poudres submicroniques peuvent être utilisées notamment pour le marquage fiduciaire des textiles ou plastiques.

Le document WO-A2-2005/074631 [3] concerne un procédé pour contrôler l'aggrégation de nanoparticules à base de terres rares, par exemple des nanoparticles d'hydroxyacétate d'yttrium, en complexant ces particules avec des copolymères dibloc ou tribloc pour former des aggrégats. Les complexes sont formés en mélangeant une dispersion à base de terre rare avec une solution du copolymère au moyen d'un agitateur vortex.

Dans ce document on cherche donc plutôt à agglomérer les particules et non à les désagglomérer.

Le document WO-A1-2006/111650 [4] décrit une dispersion colloïdale dans une phase continue, essentiellement aqueuse, d'un oxyde mixte du cérium et d'au moins un autre élément choisi parmi le zirconium, les terres rares autres que le cérium, le titane et l'étain.

Cette dispersion est préparée en formant un milieu liquide comprenant des sels de cérium et d'au moins un autre élément, en mettant en contact le milieu avec une base pour obtenir un pH d'au moins 9 et ainsi un précipité, en séparant le précipité du milieu, en lavant le précipité, et en peptisant le précipité par traitement avec un acide.

Ce document ne décrit pas la préparation de dispersions colloïdales d'oxydes de terres rares dans un milieu hydrophobe.

Le document WO-A1-03/022743 [5] est relatif à une dispersion colloïdale aqueuse de particules d'un vanadate ou d'un phosphovanadate d'au moins une terre rare luminescent comprenant un complexant ou un anion d'un acide monovalent soluble dans l'eau.

Cette dispersion est préparée en mettant en contact soit une dispersion colloïdale de départ soit une dispersion de complexes de départ dont le pH est d'au moins 7, avec des ions vanadates et éventuellement des ions phosphates, et on ajuste le pH du milieu à au moins 9.

Ce document ne décrit pas la préparation de dispersions colloïdales d'oxydes de terres rares dans un milieu hydrophobe.

Le document WO-A1-O1/94262 [6] concerne une dispersion colloïdale d'un composé du cérium tel qu'un oxyde ou oxyde hydraté, ou d'un composé du cérium avec au moins un autre élément choisi parmi le titane, le vanadium, le chrome, le manganèse, le fer, le cobalt, le nickel, le cuivre, le zinc, l'aluminium, le gallium, le zirconium et les terres rares autres que le cérium. Cette dispersion comprend un acide aminé qui se lie aux particules colloïdales par complexation chimique, liaison électrostatique ou adsorption en améliorant ainsi la stabilité colloïdale de la dispersion.

Cette dispersion est préparée simplement par addition d'un acide aminé à une dispersion colloïdale d'un composé de cérium ou d'un composé de cérium avec un autre élément. Cette addition peut se faire sous agitation.

Le solvant de la dispersion peut être choisi parmi les alcools, les glycols, les éthers de glycol, les polyols, et les cétones. Toutefois dans les exemples, seules des dispersions aqueuses sont préparées.

Le document GB-A-1018005 [7] décrit des composés luminescents qui sont des oxydes mixtes de terres rares ou des sels de ceux-ci. Ces composés peuvent être incorporés dans une solution ou dispersion d'un liant tel qu'un matériau transparent à la radiation émise par le composé luminescent. La composition ainsi obtenue peut être appliquée sur une surface, et après évaporation du solvant donner un revêtement luminescent.

Par exemple, un oxyde mixte d'europium et d'yttrium est ajouté à une solution à 20% de poly(méthacrylate de méthyle) dans la méthyl-éthyl cétone et la solution est vigoureusement agitée pour donner une suspension homogène qui est ensuite appliquée sur une plaque de verre et séchée pour donner un revêtement fluorescent dans le rouge sous excitation UV.

Il n'existe dans ce document aucune indication permettant de conclure qu'une stabilisation dans le temps des particules est obtenue.

Le document WO-A2-2006/069028 [8] a trait à des formulations à photoluminescence, phosphorescence persistante et de haute intensité qui comprennent un composé photoluminescent phosphorescent tel qu'un aluminate d'oxyde métallique activé par l'europium, un milieu liquide, une résine polymère et au moins un agent stabilisant tel qu'un dispersant pour éviter l'agglomération des particules, cause de la dégradation de l'intensité lumineuse et de la persistance, et éventuellement un agent mouillant.

Il semble que dans ce document des dispersions de nanoparticules d'oxydes de terres rares luminescents désagglomérées et stabilisées dans un milieu hydrophobe n'aient pas été préparées.

L'utilisation d'agents tensioactifs pour la dispersion ou l'adsorption en surface de particules minérales notamment de particules d'oxydes est décrite dans les documents WO-A1-2003/039725 [9] et WO-A1-2003/039724 [10].

Le document [9] décrit des compositions émulsifiantes comprenant des nanoparticules minérales à surface modifiée avec des chaînes organiques qui sont préparées en formant une phase hydrophobe et une dispersion aqueuse colloïdale de particules nanométriques à base d'un phosphate ou vanadate de terres rares, la dispersion aqueuse ou la phase hydrophobe comprenant un agent tensioactif moléculaire susceptible de s'associer aux particules colloïdales; puis en mélangeant la phase hydrophobe et la dispersion aqueuse et en soumettant le mélange à une émulsification éventuellement suivie d'une centrifugation.

Dans ce document on cherche essentiellement à former des émulsions biphasiques et non des dispersions stabilisées dans un solvant hydrophobe.

Le document [10] a trait à des émulsions multiples par exemple de type eau dans l'huile dans l'eau comprenant en tant qu'espèces stabilisantes au niveau de l'interface eau-huile des particules solides de dimensions nanométriques à la surface desquelles sont liées des chaînes organiques à caractère hydrophobe.

Comme dans le document [9] on cherche essentiellement, dans ce document, à former des émulsions multiples et non des dispersions stabilisées dans un solvant uniquement hydrophobe.

Le document CN-A-2001/109551 [11] décrit, selon l'abrégé, un procédé dans lequel des nanoparticles de terres rares par exemple des nanoparticules d'oxyde de gadolinium ou d'oxyde d'yttrium dopé à l'europium d'une taille de 3 à 400 nm sont dispersées dans un solvant organique contenant un agent tensioactif, on y ajoute un monomère fonctionnel, un réactif fonctionnel et un agent de couplage, et on réalise une polymérisation en suspension en présence d'un amorceur moyennant quoi les nanoparticles sont recouvertes d'un revêtement polymérique.

Il n'est pas précisé si dans la dispersion les nanoparticles sont désagglomérées et stabilisées.

Il apparait donc au vu de ce qui précède que la dispersion de particules, et notamment de nanoparticules, d'oxydes de terre rares luminescents dans des milieux essentiellement polaires, hydrophiles est connue mais que le problème de la désagglomération et de la stabilisation de ces nanoparticules dans un milieu, solvant hydrophobe n'a pas été résolu.

Il existe un besoin non encore satisfait pour des dispersions de particules d'oxydes de terres rares luminescentes désagglomérées et stabilisées, dans un milieu hydrophobe tel que la méthyl-éthyl cétone.

La préparation de telles dispersions permettrait d'incorporer facilement les particules d'oxydes de terres rares luminescents dans des polymères à des fins de marquage, car de nombreux polymères sont en effet solubles dans les solvants hydrophobes.

Par particules stabilisées, on entend généralement que la dispersion des particules d'oxydes de terres rares en solution est suffisante pour permettre son utilisation ultérieure à des fins de marquage.

Il existe de même un besoin pour un procédé de préparation de telles dispersions de particules désagglomérées, stabilisées, d'oxydes de terres rares

### EXPOSÉ DE L'INVENTION

Le but de la présente invention est entre autres de répondre à ces besoins.

Le but de la présente invention est encore de fournir des dispersions de particules désagglomérées et stabilisées, d'oxydes de terres rares, dans un solvant, milieu hydrophobe et un procédé de préparation de ces dispersions de particules qui ne présentent pas les inconvénients, limitations, défauts et désavantages des dispersions et de leurs procédés de préparation de l'art antérieur.

Ce but, et d'autres encore, sont atteints, conformément à l'invention, par une dispersion de particules d'au moins un oxyde d'au moins une terre rare luminescent, désagglomérées et stabilisées dans un milieu liquide hydrophobe additionné d'au moins un agent tensioactif, dans laquelle ledit agent tensioactif est un agent tensioactif non ionique ayant une balance lipophile/hydrophile « HLB » inférieure à 12.

Avantageusement, l'agent tensioactif non ionique a une « HLB » inférieure à 11, par exemple de 4 à 10.

Avantageusement l'agent tensioactif non ionique comprend au moins une chaîne carbonée de 5 à 40 atomes de carbone.

Une dispersion de nanoparticles d'au moins un oxyde d'au moins une terre rare dans laquelle les nanoparticules sont désagglomérées et stabilisées dans un milieu liquide hydrophobe, ledit milieu hydrophobe comprenant en outre un agent tensioactif spécifique, qui est un tensioactif non ionique, comprenant éventuellement au moins une chaîne carbonée de 5 à 40 atomes de carbone, et ayant une balance lipophile/hydrophile « HLB » spécifique inférieure à 12, n'a jamais été décrite dans l'art antérieur, tel que représenté notamment par les documents énumérés plus haut.

La dispersion selon l'invention ne présente pas les inconvénients en matière de stabilité insuffisante et d'agglomération des particules des dispersions dans un milieu hydrophobe de l'art antérieur et apporte une solution aux problèmes posés par les dispersions de particules d'oxydes de terres rares luminescents en milieu hydrophobe de l'art antérieur.

Il a été mis en évidence selon l'invention que, en particulier, l'utilisation dans les dispersions selon l'invention d'un agent tensioactif spécifique, non ionique, et de plus de « HLB » spécifique c'est-à-dire, de faible « HLB », permettait d'obtenir de manière surprenante, et pour la première fois, une excellente homogénéité de la dispersion, une absence d'agglomérats, et une excellente stabilité.

Il a en outre été constaté que la stabilisation obtenue avec le tensioactif spécifique, de « HLB » spécifique, mis en oeuvre selon l'invention était supérieure à la stabilisation obtenue avec d'autres tensioactifs ioniques et non ioniques ne satisfaisant pas à la condition spécifique de « HLB » faible précisée ci-dessus.

Les résultats expérimentaux donnés ci-dessous dans le Tableau 1, présentent, pour des milieux liquides hydrophobes analogues, des particules analogues, et pour différents tensioactifs, la durée (t) au bout de laquelle l'intensité de fluorescence a diminué de moitié, ce qui équivaut à la durée au bout de laquelle 50% des particules se sont réagglomérées et ont sédimenté.

**Tableau 1**

| **Tensioactif** | **Type** | **« HLB »** | **t** |
|---|---|---|---|
| Igepal^{®} CO-520 | Non ionique | HLB 10 | > 6000 sec |
| CTAB | Cationique | HLB 10 | 1700 sec |
| Tween^{®} 80 | Non ionique | HLB 15 | 1100 sec |
| Triton^{®} x100 | Non ionique | HLB 13,5 | Qq sec (par exemple 1 à 10 sec) |
| Sans tensioactif | | | Qq sec (par exemple 1 à 10 sec) |

Ces résultats montrent que les deux conditions de caractère non ionique et de « HLB » faible, qui sont celles spécifiques satisfaites par les tensioactifs mis en oeuvre selon l'invention, assurent une bien meilleure stabilisation colloïdale dans le solvant considéré. Ainsi le temps t pour l'IGEPAL^{®} CO-520 est-il supérieur à 6000 sec ce qui est plus de quatre fois supérieur à une dispersion contenant un tensioactif de « HLB » faible mais de type cationique, plus de cinq fois supérieur à une dispersion contenant un tensioactif non ionique mais de « HLB » élevée supérieure à 12, et infiniment supérieur à un autre tensioactif non ionique et également de « HLB » élevée supérieure à 12.

Il est à noter que l'IGEPAL^{®} CO-520 satisfait également à la condition optionnelle de longueur de chaîne carbonée mentionnée plus haut.

Les termes particules « stabilisées » et « désagglomérées » sont bien connus de l'homme du métier dans ce domaine de la technique

On entend généralement par particules « désagglomérées », que dans la dispersion, au moins 60%, de préférence au moins 70%, de préférence encore au moins 90% en nombre des particules par exemple des nanoparticules sont des particules individuelles.

On entend généralement par dispersion dans laquelle les particules sont « stabilisées » une dispersion dans laquelle au bout d'une durée de 1 à quelques heures, par exemple 1 à 10 heures, après la dispersion des particules dans le milieu, au moins 50 % des particules ne sont pas sédimentées et ces particules sont encore désagglomérées dans une proportion de 50%.

Comme on l'a déjà indiqué plus haut, il est également possible de définir la stabilité des particules eu égard à l'utilisation à des fins de marquage qui est faite de la dispersion. Par particules stabilisées on peut alors aussi entendre que la dispersion des particules d'oxydes de terres rares en solution est suffisante pour permettre son utilisation ultérieure à des fins de marquage.

Généralement, ledit milieu liquide hydrophobe est constitué par un solvant organique hydrophobe ou un mélange de solvants organiques hydrophobes.

Il n'existe aucune limitation quant au solvant organique ou au mélange de solvants organiques hydrophobes qui peut constituer le milieu liquide.

Le ou les solvant(s) organique(s) hydrophobe(s) peuvent être choisis de façon générale, parmi tous les solvants substantiellement insolubles dans l'eau.

Le ou les solvants pourront être choisis parmi les cétones telles que les dialkylcétones comme l'acétone et la méthyl-éthylcétone (MEK), et les alkyl arylcétones ; les esters, tels que les esters d'alkyle linéaires ou ramifiés par exemple en C₁ à C₆ ou cycliques, d'acides gras, de l'acide acétique ou de l'acide benzoïques les hydrocarbures tels que les hydrocarbures saturés, insaturés, ou aromatiques comme les alkyl (par exemple en C₁ à C₆) benzènes, tels que le toluène et le xylène, et les alkyl (par exemple en C₁ à C₆) naphtalènes; les amides d'acides alcane (par exemple en C₁ à C₆) carboxyliques; les alkyl (par exemple en C₁ à C₆) et alcényl (par exemple en C₁ à C₆) pyrolidones tels que la, vihylpyrolidone (VP); les alkyl (par exemple en C₁ à C₆) caprolactames; les solvants halogénés tels que les solvants chlorés comme le chloroforme ; et leurs mélanges.

Les particules de la dispersion ont généralement une taille moyenne de 2 nm à 1 micromètre.

Avantageusement, les particules de la dispersion sont des nanoparticules qui ont une taille moyenne de 100 à 500 nm, de préférence de 100 à 300 nm.

La terre rare peut être généralement choisie parmi Y, Ce, Pr, Nd, Pm, Sm, Eu, Gd, Tb, Dy, Ho, Er, Tm, Yb, et Lu.

L'oxyde de terre rare luminescent est généralement un oxyde de terre rare dopé avec un élément dopant.

Cet élément dopant est généralement également une terre rare mais différente de la terre rare de l'oxyde.

De tels oxydes de terres rares sont connus et disponibles sur le marché.

Ainsi, l'oxyde peut être l'oxyde de gadolinium dopé au terbium, l'oxyde de gadolinium dopé à l'europium, l'oxyde d'ytterbium dopé à l'europium, ou l'oxyde de vanadium dopé à l'europium.

Généralement, la concentration des particules d'oxyde(s) dans la dispersion est de 0,01% à 10% en masse, de préférence de 1 à 5% en masse.

Il n'existe aucune limitation quant au(x) tensioactif (s) du moment qu' il (s) satisfait (font) aux conditions énumérées plus haut concernant notamment la « HLB ».

Avantageusement, le tensioactif non ionique peut être choisi parmi les agents tensioactifs composés des groupements alkyls phénols, notamment nonyl phénols ou octyphénols, et éthylène oxydes (de différentes tailles notamment 1,5 ; 2 ou 5) selon toute combinaison permettant de conserver une « HLB » inférieure à 12, ainsi que leurs mélanges.

Des exemples de ces tensioactifs sont le polyoxyéthylène (5) isoctyl phényl éther, le polyoxyéthylène (5) nonyl phényl éther, le polyoxyéthylène (2) isoctyl phényl éther, et le polyoxyéthylène (2) nonyl phényl éther, disponibles auprès de la société General Dyestuff Corporation sous les dénominations respectives IGEPAL^{®} CA-520, IGEPAL^{®} CO-520, IGEPAL^{®} CA-210 et IGEPAL^{®} CO-210, et les mélanges de ceux-ci.

Généralement, la concentration en agent tensioactif est de 0,001 à 10% en masse, de préférence de 0,01 à 5% en masse ; de préférence encore de 0,05 à 5% en masse; mieux de 0,05 à 2% en masse; mieux encore de 0,1 à 1% en masse de la masse totale de la dispersion.

L'invention concerne en outre un procédé de préparation de la dispersion telle que décrite ci-dessus, dans lequel on réalise les étapes successives suivantes :
- on ajoute les particules d'au moins un oxyde d'au moins une terre rare luminescent au milieu hydrophobe de façon à former ainsi une dispersion A ;
- on ajoute à la dispersion A, l'agent tensioactif non ionique ;
- on soumet la dispersion A additionnée de l'agent tensioactif non ionique à au moins une action mécanique.

Il s'est avéré que grâce à l'association, conformément au procédé selon l'invention, d'un agent tensioactif non ionique spécifique, de « HLB » spécifique, tel que décrit plus haut et d'une action mécanique il était possible de désagglomérer parfaitement des agrégats d'oxydes de particules de terres rares dans un milieu hydrophobe par exemple à base des solvants acétone et/ou méthyl-éthyl cétone.

On obtient ainsi grâce au procédé selon l'invention et à cette véritable synergie qui se produit entre l'agent tensioactif spécifique de « HLB » spécifique et l'action mécanique des dispersions dans un solvant hydrophobe dans lesquelles les particules sont parfaitement désagglomérées et stabilisées.

Aucun des procédés de l'art antérieur ne permet d'obtenir de telles propriétés excellentes pour des dispersions d'oxydes de terres rares luminescents spécifiquement dans des solvants organiques hydrophobes et aucun des documents de l'art antérieur ne mentionne ni ne suggère la mise en oeuvre simultanée pour préparer des dispersions dans un milieu hydrophobe, d'un agent tensioactif spécifique, de « HLB » spécifique, faible, et d'une action mécanique.

L'action mécanique peut être une action de cisaillement, une action ultrasonique, une action de broyage ou une combinaison de deux ou plus de ces actions.

L'invention a également trait à un vernis comprenant les particules d'au moins un oxyde d'au moins une terre rare luminescent, désagglomérées et stabilisées telles que décrites dans ce qui précède, au moins un solvant organique hydrophobe, et au moins un polymère.

Dans ce vernis, la concentration des particules est généralement de 0,01% à 1% en masse, de préférence de 0,1% en masse.

Avantageusement le polymère est un polymère filmogène.

Le polymère peut être choisi parmi tous les polymères solubles dans les solvants hydrophobes ou partiellement. C'est-à-dire que le polymère peut être choisi parmi les polymères suivants donnés à titre d'exemples non limitatifs: les poly(chlorure de vinyle)s, les aminoplastes, les polyuréthanes, les polyesters insaturés, les phénoplastes, les polysiloxanes, les résines époxydes, allyliques, les vinylesters, les alkydes, les polyurées, les polyisocyanurates, les poly(bismaléimide)s et les polybenzimidazoles.

L'invention concerne aussi un procédé de préparation du vernis décrit plus haut dans lequel on mélange une solution d'au moins un polymère dans au moins un solvant organique hydrophobe avec la dispersion de particules d'au moins un oxyde d'au moins une terre rare luminescent telle que décrite ci-dessus, et on soumet le mélange à au moins une action mécanique.

Avantageusement, le ou les solvant(s) organique(s) hydrophobe(s) de la solution d'au moins un polymère est (sont) le(s) même(s) que le(s) solvant(s) organique(s) hydrophobe(s) de la dispersion de particules.

L'invention a également pour objet un procédé de marquage d'un substrat par enduction, imprégnation de ce substrat avec un vernis, dans lequel ledit vernis est tel que défini dans ce qui précède.

L'invention concerne en outre un substrat caractérisé en ce qu'il est pourvu d'une marque ou marquage obtenu par séchage et/ou absorption du vernis tel que décrit ci-dessus.

L'invention a trait en outre à un procédé pour identifier des objets, articles qui comprend les étapes successives suivantes :
- on réalise des marquages, marques, notamment des marquages de sécurité sur les objets, par exemple un marquage pour chaque objet, en utilisant le vernis selon l'invention telle que décrite ci-dessus, lesdits marquages étant invisibles à l'oeil nu et visibles seulement lorsqu'ils sont illuminés par un rayonnement ultraviolet ;
- on soumet les objets à une excitation par un rayonnement ultraviolet;
- on lit lesdits marquages en détectant le rayonnement de luminescence émis par ces marquages ;
- on identifie lesdits objets en fonction de ladite lecture.

### BREVE DESCRIPTION DES DESSINS

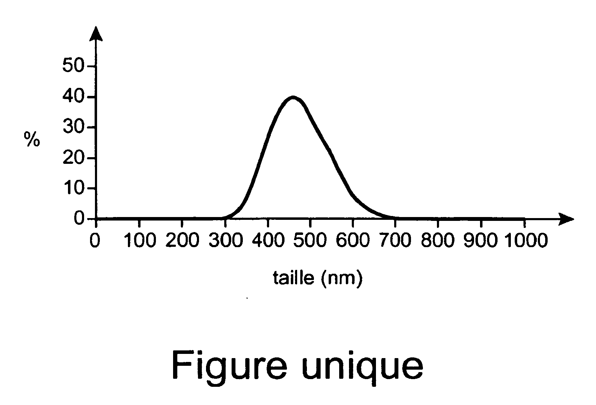

L'invention sera mieux comprise à la lecture de la description détaillée qui va suivre, donnée à titre illustratif et non limitatif, en relation avec le dessin joint dans lequel :
- la figure unique est le diagramme de distribution de taille mesurée par diffusion de lumière des nanoparticules de la dispersion de l'exemple 1 conforme à l'invention.

En abscisse est portée la taille (en nm) et en ordonnée est porté le pourcentage de nanoparticules.

### EXPOSE DETAILLE DE L'INVENTION

La description qui suit est faite essentiellement en relation avec le procédé de préparation selon l'invention de dispersions de particules d'oxydes de terres rares luminescents.

Selon l'invention on prépare une suspension ou dispersion dans un milieu liquide hydrophobe de particules d'oxydes de terres rares luminescents.

Pour cela on ajoute tout d'abord des particules d'oxydes de terres rares luminescents à un milieu liquide hydrophobe de façon à former une première suspension ou dispersion A.

Une suspension ou dispersion est généralement définie comme un milieu liquide dans lequel sont réparties des particules solides.

Les particules d'oxydes de terres rares selon l'invention ont généralement une taille de 2 nm à 1 micromètre.

Par taille on entend généralement la plus grande dimension de ces particules.

Dans le cas le plus général où ces particules sont essentiellement sphériques et ont la forme de sphères ou sphéroïdes, cette taille est définie par le diamètre des particules.

Par taille on entend généralement la taille moyenne, par exemple le diamètre moyen des particules.

Avantageusement, les particules des dispersions selon l'invention sont des nanoparticules avec une taille moyenne de 100 à 500 nm, de préférence de 100 à 300 nm.

Par terres rares on entend l'yttrium et l'ensemble des éléments appelés aussi lanthanides, c'est-à-dire les éléments de numéro atomique compris entre 57 et 71 inclus tels que Ce, Pr, Nd, Pm, Sm, Eu, Gd, Tb, Dy, Ho, Er, Tm, Yb, Lu, et Y.

Par luminescence on entend l'émission d'une radiation électromagnétique, notamment d'une radiation se situant dans le domaine visible, sous l'effet d'une excitation notamment par de la lumière ultraviolette.

Le terme luminescence inclut aussi bien la photoluminescence que la phosphorescence que la fluorescence.

Les oxydes de terres rares luminescents qui constituent les particules des dispersions selon l'invention sont généralement des oxydes dopés luminescents.

Un oxyde de terres rare est dit « dopé » par un élément dopant, généralement lorsque ledit élément dopant représente moins de 25% en masse de la masse totale des cations métalliques.

L'oxyde de terre rare inclus dans la dispersion selon l'invention pourra répondre à la formule suivante: Ln₂O₃ où Ln représente Y, Ce, Pr, Nd, Pm, Sm, Eu, Gd, Tb, Dy, Ho, Er, Tm, Yb, ou Lu.

L'oxyde peut être dopé avec un élément dopant qui est de préférence aussi une terre rare Ln, mais différente de la terre rare de l'oxyde, à raison de 0,1 à 25% en masse, par exemple à raison de 5% en masse, de la masse de l'oxyde de terres rares.

On peut citer par exemple l'oxyde de gadolinium dopé au Terbium (5%) qui est fluorescent, ou bien l'oxyde de gadolinium dopé à l'europium ou l'oxyde d'ytterbium dopé à l'europium, ou encore l'oxyde de vanadium dopé à l'europium.

Le milieu liquide hydrophobe de la dispersion selon l'invention est constitué par un solvant organique hydrophobe ou un mélange de solvants organiques hydrophobes.

Ce solvant ou ces solvants hydrophobe(s) peut (peuvent) être choisi(s) parmi tous les solvants hydrophobes connus de l'homme du métier. Des solvants organiques hydrophobes préférés ont déjà été énumérés plus haut.

Avantageusement, le ou les solvant(s) hydrophobe(s) est (sont) choisi(s) parmi l'acétone, la méthyl-éthyl-cétone, le chloroforme et les mélanges de celles -ci.

La concentration des particules d'oxydes de terres rares dans la suspension ou dispersion A est généralement de 0,01 à 10% en masse, de préférence de 1 à 5% en masse.

On ajoute ensuite à la suspension, dispersion A, et conformément à l'invention un agent tensioactif spécifique qui est un agent tensioactif non ionique à faible balance lipophile/hydrophile (« HLB » ou « Hydrophilic to Lipophilic Balance ») et de préférence à longue chaîne carbonée.

Par faible « HLB », on entend, au sens de l'invention une valeur de « HLB » inférieure à 12, de préférence inférieure à 11 et par exemple de 4 à 10.

Par tensioactif à longue chaîne carbonée on entend au sens de l'invention que l'agent tensioactif comprend de préférence au moins une chaîne carbonée comprenant de 5 à 40 atomes de carbone.

Les tensioactifs non ioniques répondant à ces conditions relatives à la « HLB » et éventuellement à la longueur de chaîne carbonée peuvent être facilement déterminés par l'homme du métier.

Parmi ces tensioactifs non ioniques, on peut citer notamment les agents tensioactifs composés des groupements alkyl phénols (notamment nonyl phénols ou octylphénols) et éthylène oxydes (de différentes tailles: notamment 1,5 ; 2 ; ou 5), selon toute combinaison permettant de conserver une « HLB » inférieure à 12 ainsi que leurs mélanges. Des exemples de ces tensioactifs (IGEPAL^{®}) ont déjà été donnés plus haut.

L'agent tensioactif est généralement ajouté à la suspension, dispersion A, à une concentration de 0,001 à 10% en masse, de préférence de 0,01 à 5% en masse ; de préférence encore de 0,05 à 5% en masse ; mieux de 0,05 à 2% en masse ; mieux encore de 0,1 à 1% en masse de la masse totale de la dispersion, suspension A.

Conformément à l'invention, on soumet ensuite la suspension, dispersion à une action mécanique, à un traitement mécanique.

C'est la combinaison, véritablement synergique, du tensioactif non ionique spécifique décrit ci-dessus et de l'action mécanique qui permet de désagglomérer, déflocculer, les particules, d'individualiser les particules, d'homogénéiser la suspension, dispersion et d'assurer ainsi une excellente stabilité de la dispersion, suspension de particules.

Cette action mécanique peut être une action de cisaillement, de broyage ou la combinaison de plusieurs de ces actions.

On pourra par exemple soumettre la suspension, dispersion simultanément à une action d'agitation et à l'action d'ultrasons.

Elle peut être réalisée dans un appareil tel qu'un homogénéisateur, et la suspension peut simultanément être soumise à des ondes ultrasoniques par l'intermédiaire d'une corne à ultrasons provoquant une cavitation dans la dispersion.

On peut ensuite mélanger la suspension désagglomérée, stabilisée obtenue avec une solution d'un polymère dans un solvant. Une telle solution peut être désignée par le terme de vernis.

Ou bien on peut séparer les particules, les sécher et les redisperser ensuite dans une solution d'un polymère dans un solvant, à savoir un vernis.

Le solvant de la solution de polymère, en d'autre termes le solvant de ce premier vernis, est choisi généralement de telle sorte qu'il soit miscible avec le solvant hydrophobe de la suspension stabilisée, et que, globalement, le premier vernis soit soluble dans le solvant organique hydrophobe de la suspension, dispersion de particules.

Ainsi, le solvant de la solution de polymère, du premier vernis, peut-il être choisi parmi l'acétone, la méthyl éthyl cétone, les hydrocarbures et leurs mélanges.

De préférence le ou les solvants de la solution de polymère est (sont) le(s) même(s) que celui du milieu hydrophobe de la suspension, dispersion de particules d'oxydes de terres rares.

Le polymère comme indiqué plus haut, est avantageusement choisi parmi les polymères filmogènes.

Le polymère peut être choisi parmi tous les polymères solubles dans des solvants hydrophobes ou partiellement, c'est-à-dire en particulier un polymère choisi parmi, à titre d'exemples non limitatifs : les PVCs, les aminoplastes, les polyuréthanes, les polyesters insaturés, les phénoplates, les polysiloxanes, les résines époxydes, allyliques et vinylesters, les alkydes, les polyurées, les polyisocyanurates, les poly(bismaléimide)s et les polybenzimidazoles, et leurs mélanges.

La redispersion des particules dans le premier vernis ou bien le mélange de la suspension, dispersion de particules avec le premier vernis est effectué de telle manière que la concentration en particules dans le vernis final obtenu après mélange, redispersion, soit généralement de 0,01 à 1% en masse de la masse totale du vernis, de préférence de 0,1 à 0,5 % en masse de la masse totale du vernis.

Conformément à l'invention, on soumet ensuite le mélange de la suspension, dispersion et de la solution de polymère (premier vernis) à une action mécanique, à un traitement mécanique, analogue à celui mis en oeuvre pour obtenir la suspension, dispersion de particules.

De nouveau la combinaison du tensioactif non ionique spécifique de « HLB » spécifique décrit ci-dessus et de l'action mécanique permet de désagglomérer, déflocculer, les particules, d'individualiser les particules, d'homogénéiser la suspension, dispersion et d'assurer ainsi une excellente stabilité du vernis final obtenu dans lequel les particules d'oxyde sont également désagglomérées et stabilisées.

Le vernis final peut ensuite être appliqué, enduit, revêtu sur tout type de substrat pour réaliser un marquage, une marque sur celui-ci. Cette application, enduction peut être réalisée par tout procédé, d'enduction, revêtement, application connu de l'homme du métier.

Ladite marque ou marquage comprend essentiellement lesdites particules d'oxydes de terres rares luminescents ainsi que le polymère du vernis dans lequel les particules d'oxydes de terres rares luminescents sont uniformément réparties, et ce vernis est obtenu par évaporation et/ou absorption dans le substrat, d'essentiellement la totalité des autres constituants de l'encre tels que les solvants.

Ce substrat peut être en métal, par exemple, en aluminium, en acier ; en verre ; en céramique ; en un matériau contenant de la cellulose tel que du papier, éventuellement couché ou glacé, du carton ou du bois ; en polymère synthétique (« plastique ») tel que les PVCs, les PET, les polyoléfines, telles que les polyéthylènes (PE), les polypropylènes (PP) ; en « Plexiglas » ; en tissu ; en « non-tissé » ; ou en toute autre substance non poreuse ou poreuse ; ou en composite de plusieurs des matériaux précédents.

Ce substrat peut être choisi en particulier parmi les articles d'habillement, ou les documents fiduciaires.

On obtient des marquages, marques, homogènes d'excellente qualité sur tous les substrats. Le marquage obtenu, du fait du caractère stable et non aggloméré de la dispersion puis du vernis ayant servi à l'obtenir est stable, et résistant dans le temps, et peut être ainsi soumis à des opérations de contrôle de manière fiable tout au long de la durée de vie de l'article, objet marqué.

En outre ce marquage, cette marque fait partie intégrante de l'article, de l'objet, ne dépend pas de l'emballage de celui-ci ou d'étiquettes fixées à celui-ci et peut concerner aussi bien des objets neufs, emballés, que des objets en usage.

Enfin le marquage, la marque, peut avoir de nombreuses formes aussi bien bidimensionnelle que tridimensionnelle selon l'utilisation recherchée.

La détection de la luminescence peut être réalisée de manière fiable sur tous types de substrats.

Le marquage selon l'invention et son identification peuvent être mis en oeuvre pour de nombreux buts parmi lesquels on peut citer notamment la traçabilité, la marque donnant alors l'indication par exemple d'un numéro de lot, ou la lutte contre la contrefaçon, le marquage étant alors un marquage « anti-contrefaçon » établissant l'origine de l'article marqué.

L'invention va maintenant être décrite en référence aux exemples suivants donnés à titre illustratif et non limitatif.

### EXEMPLE 1

On met en suspension dans la méthyl-éthyl cétone à une concentration de 1% en masse des particules 450 nm fluorescentes d'oxyde de gadolinium dopé au terbium, on obtient ainsi une suspension, solution A d'un volume de 50 mL.

On ajoute ensuite à la solution A un tensioactif non ionique à faible « HLB » (10) et à longue chaîne carbonée, à savoir le polyoxyéthylène(5)nonylphényléther à une concentration de 0,1% en masse et l'on obtient ainsi une solution A'.

On agite mécaniquement la solution A' à l'aide d'un homogénéisateur (Ultra Turrax^{®} T10 pendant 10 minutes à 2000 trs/min. Conformément à l'invention dans cette solution, dispersion, les nanoparticules d'oxyde sont « désagglomérées », ce qui est corroboré par le diagramme de distribution de taille mesurée par diffusion dynamique de lumière de la figure unique.

On mélange la solution A' avec un vernis B (soluble dans la méthyl-éthyl-cétone et composé à 50% de PVC et 50% de PVA) dans les proportions de 50 mL de solution A' pour 450 mL de vernis pour obtenir ainsi un vernis dont la concentration en particules est de 0,1 % en masse.

On agite mécaniquement le vernis à l'aide d'un homogénéisateur (Ultra Turrax^{®} T10 pendant 10 minutes à 2000 trs/min).

On enduit au pinceau un tissu avec le vernis ainsi préparé.

## Revendications

1. Dispersion de particules d'au moins un oxyde d'au moins une terre rare luminescent, désagglomérées et stabilisées dans un milieu liquide hydrophobe additionné d'au moins un agent tensioactif, dans laquelle ledit agent tensioactif est un agent tensioactif non ionique ayant une balance lipophile/hydrophile « HLB » inférieure à 12.

2. Dispersion selon la revendication 1 dans laquelle ledit agent tensioactif a une « HLB » inférieure à 11, par exemple de 4 à 10.

3. Dispersion selon l'une quelconque des revendications 1 et 2 dans laquelle ledit agent tensioactif comprend au moins une chaîne carbonée de 5 à 40 atomes de carbone.

4. Dispersion selon l'une quelconque des revendications précédentes dans laquelle ledit milieu liquide hydrophobe est constitué par un solvant organique hydrophobe ou un mélange de solvants organiques hydrophobes.

5. Dispersion selon la revendication 4 dans laquelle le ou les solvant(s) organique(s) hydrophobe(s) sont choisis parmi les cétones telles que les dialkylcétones comme l'acétone et la méthyl-éthylcétone (MEK) et les alkyl axylcétones ; les esters, tels que les esters d'alkyle linéaires ou ramifiés par exemple en C₁ à C₆, ou cycliques, d'acides gras, de l'acide acétique ou de l'acide benzoïque ; les hydrocarbures tels que les hydrocarbures saturés, insaturés, ou aromatiques comme les alkyl benzènes, tels que le toluène et le xylène, et les alkyl naphtalènes ; les amides d'acides alcane carboxyliques ; les alkyl et alcényl pyrrolidones tels que la vinylpyrrolidone ; les alkyl caprolactames ; les solvants halogénés tels que les solvants chlorés comme le chloroforme ; et leurs mélanges.

6. Dispersion selon l'une quelconque des revendications précédentes dans laquelle les particules ont une taille moyenne de 2 nm à 1 micromètre.

7. Dispersion selon la revendication 6 dans laquelle les particules sont des nanoparticules qui ont une taille moyenne de 100 à 500 nm, de préférence de 100 à 300 nm.

8. Dispersion selon l'une quelconque des revendications précédentes dans laquelle la terre rare est choisie parmi Y, Ce, Pr, Nd, Pm, Sm, Eu, Gd, Tb, Dy, Ho, Er, Tm, Yb, et Lu.

9. Dispersion selon l'une quelconque des revendications précédentes dans lequel ledit oxyde d'au moins une terre rare luminescent est un oxyde de terre rare dopé avec un élément dopant choisi de préférence parmi les terres rares différentes de la terre rare de l'oxyde.

10. Dispersion selon l'une quelconque des revendications précédentes dans laquelle ledit oxyde est l'oxyde de gadolinium dopé au terbium, l'oxyde de gadolinium dopé à l'europium, l'oxyde d'ytterbium dopé à l'europium, ou l'oxyde de vanadium dopé à l'europium.

11. Dispersion selon l'une quelconque des revendications précédentes dans laquelle la concentration des particules d'oxyde(s) dans la dispersion est de 0,01% à 10% en masse, de préférence de 1 à 5% en masse.

12. Dispersion selon l'une quelconque des revendications précédentes dans laquelle le tensioactif non ionique est choisi parmi les agents tensioactifs composés des groupements alkyls phénols, notamment nonyl phénol ou octyl phénol, et éthylène oxydes tels que le polyoxyéthylène (5) isoctyl phényl éther, le polyoxyéthylène (5) nonyl phényl éther, le polyoxyéthylène (2) isoctyl phényl éther, et le polyoxyéthylène (2) nonyl phényl éther, ou les mélanges de ceux-ci.

13. Dispersion selon l'une quelconque des revendications précédentes dans laquelle la concentration en agent tensioactif est de 0,001 à 10% en masse, de préférence de 0,01 à 5% en masse, de préférence encore de 0,05 à 5% en masse; mieux de 0,05 à 2% en masse ; mieux encore de 0,1 à 1% en masse de la masse totale de la dispersion.

14. Procédé de préparation de la dispersion selon l'une quelconque des revendications 1 à 13 dans lequel on réalise les étapes successives suivantes :
- on ajoute les particules d'au moins un oxyde d'au moins une terre rare luminescent au milieu hydrophobe de façon à former ainsi une dispersion A ;
- on ajoute à la dispersion A, l'agent tensioactif non ionique ;
- on soumet la dispersion A additionnée de l'agent tensioactif non ionique à au moins une action mécanique.

15. Procédé selon la revendication 14, dans lequel l'action mécanique est une action de cisaillement, une action ultrasonique, une action de broyage, ou une combinaison de deux ou plus de ces actions.

16. Vernis comprenant les particules d'au moins un oxyde d'au moins une terre rare luminescent, désagglomérées et stabilisées selon l'une quelconque des revendications 1 à 13, au moins un solvant organique hydrophobe, et au moins un polymère.

17. Vernis selon la revendication 16 dans lequel la concentration des particules dans le vernis est de 0,01% à 1% en masse, de préférence de 0,1% en masse.

18. Vernis selon l'une quelconque des revendications 16 et 17 dans lequel le polymère est un polymère filmogène.

19. Vernis selon l'une quelconque des revendications 16 à 18 dans lequel le polymère est choisi parmi les poly(chlorure de vinyle)s, les aminoplastes, les polyuréthanes, les polyesters insaturés, les phénoplastes, les polysiloxanes, les résines époxydes, allyliques, les vinylesters, les alkydes, les polyurées, les polyisocyanurates, les poly(bismaléimide)s et les polybenzimidazoles.

20. Procédé de préparation du vernis selon l'une quelconque des revendications 16 à 19 dans lequel on mélange une solution d'au moins un polymère dans au moins un solvant organique hydrophobe avec la dispersion de particules d'au moins un oxyde d'au moins une terre rare luminescent selon l'une quelconque des revendications 1 à 13, et on soumet le mélange à au moins une action mécanique.

21. Procédé selon la revendication 20 dans lequel le ou les solvant(s) organique(s) hydrophobe(s) de la solution d'au moins un polymère est (sont) le(s) même(s) que le(s) solvant(s) organique(s) hydrophobe(s) de la dispersion de particules.

22. Procédé de marquage de substrats par enduction, imprégnation de ces substrats avec un vernis, dans lequel ledit vernis est un vernis selon l'une quelconque des revendications 16 à 19.

23. Substrat **caractérisé en ce qu'**il est pourvu d'une marque ou marquage obtenu par séchage et/ou absorption du vernis selon l'une quelconque des revendications 16 à 19.

24. Substrat selon la revendication 23 qui est en métal, par exemple, en aluminium, en acier ; en verre ; en céramique ; en un matériau contenant de la cellulose tel que du papier, éventuellement couché ou glacé, du carton ou du bois ; en polymère synthétique (« plastique ») tel que les PVCs, les PET, les polyoléfines, telles que les polyéthylènes (PE), les polypropylènes (PP) ; en « Plexiglas » ; en tissu ; en « non-tissé » ; ou en toute autre substance non poreuse ou poreuse ; ou en composite de plusieurs des matériaux précédents.

25. Procédé pour identifier des objets, articles qui comprend les étapes successives suivantes :
- on réalise des marquages, marques, notamment des marquages de sécurité sur les objets, par exemple un marquage pour chaque objet, en utilisant le vernis selon l'une quelconque des revendications 16 à 19, lesdits marquages étant invisibles à l'oeil nu et visibles seulement lorsqu'ils sont illuminés par un rayonnement ultraviolet ;
- on soumet les objets à une excitation par un rayonnement ultraviolet ;
- on lit lesdits marquages en détectant le rayonnement de luminescence émis par ces marquages ;
- on identifie lesdits objets en fonction de ladite lecture.

## Claims

1. Dispersion of particles of at least one oxide of at least one luminescent rare earth, disaggregated and stabilized in a hydrophobic liquid medium to which at least one surfactant is added, wherein said surfactant is a non-ionic surfactant having an HLB (hydrophilic-to-lipophilic balance) lower than 12.

2. Dispersion according to Claim 1, wherein said surfactant has an HLB lower than 11, for example from 4 to 10.

3. Dispersion according to either of Claims 1 and 2, wherein said surfactant comprises at least one carbon chain of 5 to 40 carbon atoms.

4. Dispersion according to any one of the preceding claims, wherein said hydrophobic liquid medium consists of a hydrophobic organic solvent or a mixture of hydrophobic organic solvents.

5. Dispersion according to Claim 4, wherein the hydrophobic organic solvent or solvents are selected from ketones such as dialkyl ketones like acetone and methyl ethyl ketone (MEK) and alkyl aryl ketones; esters, such as linear or branched alkyl (for example C₁ to C₆ alkyl), or cyclic esters, of fatty acids, of acetic acid or of benzoic acid; hydrocarbons such as saturated, unsaturated or aromatic hydrocarbons, like alkylbenzenes, such as toluene and xylene, and alkyl naphthalenes; amides of alkane carboxylic acids; alkyl and alkenyl pyrrolidones such as vinylpyrrolidone; alkyl caprolactams; halogenated solvents such as chlorinated solvents like chloroform; and mixtures thereof.

6. Dispersion according to any one of the preceding claims, wherein the particles have an average size from 2 nm to 1 micron.

7. Dispersion according to Claim 6, wherein the particles are nanoparticles which have an average size from 100 to 500 nm, preferably from 100 to 300 nm.

8. Dispersion according to any one of the preceding claims, wherein the rare earth is selected from Y, Ce, Pr, Nd, Pm, Sm, Eu, Gd, Tb, Dy, Ho, Er, Tm, Yb, and Lu.

9. Dispersion according to any one of the preceding claims, wherein said oxide of at least one luminescent rare earth is a rare-earth oxide doped with a doping element preferably selected from rare earths different from the rare earth of the oxide.

10. Dispersion according to any one of the preceding claims, wherein said oxide is gadolinium oxide doped with terbium, gadolinium oxide doped with europium, ytterbium oxide doped with europium, or vanadium oxide doped with europium.

11. Dispersion according to any one of the preceding claims, wherein the concentration of the oxide particles in the dispersion is from 0.01% to 10% by weight, preferably from 1 to 5% by weight.

12. Dispersion according to any one of the preceding claims, wherein the non-ionic surfactant is selected from surfactants composed of alkyl phenol groups, in particular nonyl phenol or octyl phenol, and ethylene oxide groups such as polyoxyethylene (5) isoctyl phenyl ether, polyoxyethylene (5) nonyl phenyl ether, polyoxyethylene (2) isoctyl phenyl ether, and polyoxyethylene (2) nonyl phenyl ether, or mixtures thereof.

13. Dispersion according to any one of the preceding claims, wherein the surfactant concentration is from 0.001 to 10% by weight, preferably from 0.01 to 5% by weight, even more preferably from 0.05 to 5% by weight; even better from 0.05 to 2% by weight; and still better from 0.1 to 1% by weight of the total weight of the dispersion.

14. Method for preparing the dispersion according to any one of Claims 1 to 13, wherein the following steps are carried out in succession:
- the particles of at least one oxide of at least one luminescent rare earth are added to the hydrophobic medium to form thereby a dispersion A;
- the non-ionic surfactant is added to dispersion A;
- dispersion A containing the non-ionic surfactant is subjected to at least one mechanical action.

15. Method according to Claim 14, wherein the mechanical action is a shear action, an ultrasonic action, a grinding action, or a combination of two or more of these actions.

16. Varnish comprising particles of at least one oxide of at least one luminescent rare earth, disaggregated and stabilized according to any one of Claims 1 to 13, at least one hydrophobic organic solvent, and at least one polymer.

17. Varnish according to Claim 16, wherein the concentration of the particles in the varnish is between 0.01% and 1% by weight, preferably 0.1% by weight.

18. Varnish according to either of Claims 16 and 17, wherein the polymer is a film-forming polymer.

19. Varnish according to any one of Claims 16 to 18, wherein the polymer is selected from poly(vinyl chloride)s, aminoplasts, polyurethanes, unsaturated polyesters, phenoplasts, polysiloxanes, epoxy resins, allyl resins, vinyl esters, alkyds, polyureas, polyisocyanurates, poly(bismaleimide)s and polybenzimidazoles.

20. Method for preparing the varnish according to any one of Claims 16 to 19, wherein a solution of at least one polymer in at least one hydrophobic organic solvent is mixed with the dispersion of particles of at least one oxide of at least one luminescent rare earth according to any one of Claims 1 to 13, and the mixture is subjected to at least one mechanical action.

21. Method according to Claim 20, wherein the hydrophobic organic solvent or solvents of the solution of at least one polymer is(are) the same as the hydrophobic organic solvent(s) of the dispersion of particles.

22. Method for marking substrates by coating, impregnation of these substrates with a varnish, wherein said varnish is a varnish according to any one of Claims 16 to 19.

23. Substrate **characterized in that** it is provided with a mark or marking obtained by drying and/or absorption of the varnish according to any one of Claims 16 to 19.

24. Substrate according to Claim 23, which is made from metal, for example, from aluminium, steel; glass; ceramic; a material containing cellulose such as paper, optionally coated or glazed, cardboard or wood; synthetic polymer ("plastic") such as PVCs, PETs, polyolefins, such as polyethylenes (PE), polypropylenes (PP); "Plexiglas"; fabric; "non-woven" fabric; or any other non-porous or porous substance; or from a composite of a plurality of the preceding materials.

25. Method for identifying objects, articles, which comprises the following steps in succession:
- markings, marks, particularly security markings are made, on objects, for example a marking for each object, using the varnish according to any one of Claims 16 to 19, said markings being invisible to the naked eye and visible only when illuminated by ultraviolet radiation;
- the objects are subjected to excitation by ultraviolet radiation;
- the said markings are read by detecting the luminescence radiation emitted by these markings;
- the said objects are identified according to the said reading.

## Patentansprüche

1. Dispersion von Teilchen wenigstens eines Oxids wenigstens eines lumineszierenden Seltenerdmetalls, die in einem hydrophoben flüssigen Medium desagglomeriert und stabilisiert sind, dem wenigstens ein Tensid zugesetzt wurde, wobei das Tensid ein nichtionisches Tensid mit einem hydro-lipophilen Verhältnis (HLB) von weniger als 12 ist.

2. Dispersion gemäß Anspruch 1, bei der das Tensid ein HLB von weniger als 11, zum Beispiel 4 bis 10 aufweist.

3. Dispersion gemäß einem der Ansprüche 1 und 2, bei der das Tensid wenigstens eine Kohlenstoffkette aus 5 bis 40 Kohlenstoffatomen umfasst.

4. Dispersion gemäß einem der vorangehenden Ansprüche, bei der das hydrophobe flüssige Medium ein hydrophobes organisches Lösungsmittel oder ein Gemisch hydrophober organischer Lösungsmittel darstellt.

5. Dispersion gemäß Anspruch 4, bei der das oder die hydrophobe(n) organische(n) Lösungsmittel aus Ketonen wie etwa Dialkylketonen wie Aceton und MethylEthylketon (MEK) und Alkylarylketonen; Estern wie etwa geraden oder verzweigten, zum Beispiel C₁-C₆-, oder cyclischen Alkylestern, von Fettsäuren, von Essigsäuren oder von Benzoesäuren; Kohlenwasserstoffen wie etwa gesättigten, ungesättigten oder aromatischen Kohlenwasserstoffen wie Alkylbenzolen wie etwa Toluol und Xylol und Alkylnaphthalinen; Alkancancarbonsäureamiden; Alkyl- und Alkenylpyrrolidonen wie etwa Vinylpyrrolidon; Alkylcaprolactamen; halogenierten Lösungsmitteln wie etwa chlorierten Lösungsmitteln wie Chloroform; und ihren Gemischen ausgewählt sind.

6. Dispersion gemäß einem der vorangehenden Ansprüche, bei der die Teilchen eine mittlere Größe von 2 nm bis 1 Mikrometer aufweisen.

7. Dispersion gemäß Anspruch 6, bei der die Teilchen Nanoteilchen sind, die eine mittlere Größe von 100 bis 500 nm, vorzugsweise 100 bis 300 nm aufweisen.

8. Dispersion gemäß einem der vorangehenden Ansprüche, bei der das Seltenerdmetall aus Y, Ce, Pr, Nd, Pm, Sm, Eu, Gd, Tb, Dy, Ho, Er, Tm, Yb und Lu ausgewählt ist.

9. Dispersion gemäß einem der vorangehenden Ansprüche, bei der das Oxid wenigstens eines lumineszierenden Seltenerdmetalls ein Seltenerdoxid ist, das mit einem vorzugsweise aus von dem Seltenerdmetall des Seltenerdoxid verschiedenen Seltenerdmetallen ausgewählten Dotierungselement dotiert ist.

10. Dispersion gemäß einem der vorangehenden Ansprüche, bei der das Oxid mit Terbium dotiertes Gadoliniumoxid, mit Europium dotiertes Gadoliniumoxid, mit Europium dotiertes Ytterbiumoxid oder mit Europium dotiertes Vanadiumoxid ist.

11. Dispersion gemäß einem der vorangehenden Ansprüche, bei der die Konzentration der Teilchen aus einem Oxid (Oxiden) in der Dispersion 0,01 bis 10 Massen-%, vorzugsweise 1 bis 5 Massen-% beträgt.

12. Dispersion gemäß einem der vorangehenden Ansprüche, bei der das nichtionische Tensid aus Tensiden ausgewählt ist, die sich aus Alkylphenolgruppen, insbesondere Nonylphenol oder Octylphenol, und Ethylenoxiden wie etwa Polyoxyethylen(5)isooctylphenylether, Polyoxyethylen(5)nonylphenylether, Polyoxyethylen(2)isooctylphenylether und Polyoxyethylen(2)nonylphenylether oder deren Gemischen zusammensetzen.

13. Dispersion gemäß einem der vorangehenden Ansprüche, bei der die Tensidkonzentration 0,001 bis 10 Massen-%, vorzugsweise 0,01 bis 5 Massen-%, bevorzugter 0,05 bis 5 Massen-%, besser 0,05 bis 2 Massen-%, noch besser 0,1 bis 1 Massen-% der Gesamtmasse der Dispersion beträgt.

14. Verfahren zur Herstellung der Dispersion gemäß einem der Ansprüche 1 bis 13, wobei die folgenden aufeinanderfolgenden Schritte ausgeführt werden:
- die Teilchen wenigstens eines Oxids wenigstens eines lumineszierenden Seltenerdmetalls werden dem hydrophoben Medium zugefügt, um auf diese Weise eine Dispersion A zu bilden;
- der Dispersion A wird das nichtionische Tensid zugesetzt;
- die mit dem nichtionischen Tensid versetzte Dispersion A wird wenigstens einer mechanischen Einwirkung unterzogen.

15. Verfahren gemäß Anspruch 14, wobei die mechanische Einwirkung eine Scherwirkung, eine Ultraschalleinwirkung, eine Mahlwirkung oder eine Kombination zweier oder mehrerer dieser Einwirkungen ist.

16. Lack umfassend die desagglomerierten und stabilisierten Teilchen wenigstens eines Oxids wenigstens eines lumineszierenden Seltenerdmetalls gemäß einem der Ansprüche 1 bis 13, wenigstens ein hydrophobes organisches Lösungsmittel und wenigstens ein Polymer.

17. Lack gemäß Anspruch 16, bei dem die Teilchenkonzentration im Lack 0,01 bis 1 Massen-%, bevorzugt 0,1 Massen-% beträgt.

18. Lack gemäß einem der Ansprüche 16 und 17, bei dem das Polymer ein filmbildendes Polymer ist.

19. Lack gemäß einem der Ansprüche 16 bis 18, bei dem das Polymer aus Poly(vinylchlorid)en, Aminoplasten, Polyurethanen, ungesättigten Polyestern, Phenoplasten, Polysiloxanen, Epoxidharzen, Allylharzen, Vinylestern, Alkydharzen, Polyharnstoffen, Polyisocyanuraten, Poly(bismaleimid)en und Polybenzimidazolen ausgewählt ist.

20. Verfahren zur Herstellung des Lacks gemäß einem der Ansprüche 16 bis 19, wobei eine Lösung wenigstens eines Polymers in wenigstens einem hydrophoben organischen Lösungsmittel mit der Dispersion von Teilchen wenigstens eines Oxids wenigstens eines lumineszierenden Seltenerdmetalls gemäß einem der Ansprüche 1 bis 13 gemischt wird und das Gemisch wenigstens einer mechanischen Einwirkung unterzogen wird.

21. Verfahren gemäß Anspruch 20, wobei das oder die hydrophobe(n) organische(n) Lösungsmittel der Lösung wenigstens eines Polymers das (die) selbe(n) wie das (die) hydrophobe(n) organische(n) Lösungsmittel der Teilchendispersion ist (sind).

22. Verfahren zur Markierung von Substraten durch Überziehen oder Imprägnieren dieser Substrate mit einem Lack, wobei der Lack ein Lack gemäß einem der Ansprüche 16 bis 19 ist.

23. Substrat **dadurch gekennzeichnet, dass** es mit einem Zeichen oder Markierung versehen ist, die durch Trocknung und/oder Absorption des Lacks gemäß einem der Ansprüche 16 bis 19 erhalten wurde.

24. Substrat gemäß Anspruch 23, das aus Metall, zum Beispiel aus Aluminium oder Stahl; Glas; Keramik; einem cellulosehaltigen Material wie etwa gegebenenfalls beschichtetem oder satiniertem Papier, Pappe, oder Holz; einem synthetischen Polymer ("Kunststoff") wie etwa PVC, PET, Polyolefinen wie etwa Polyethylenen (PE) oder Polypropylenen (PP); "Plexiglas"; Stoff; Vlies oder aus jeder anderen porösen oder nicht porösen Substanz oder einem Verbund mehrerer vorangehender Materialien ist.

25. Verfahren zum Identifizieren von Gegenständen oder Waren, das die folgenden aufeinanderfolgenden Schritte umfasst:
- auf den Gegenständen werden unter Verwendung des Lacks gemäß einem der Ansprüche 16 bis 19 Markierungen oder Zeichen, insbesondere Sicherheitsmarkierungen, zum Beispiel eine Markierung für jeder Gegenstand, hergestellt, wobei die Markierungen für das unbewaffnete Auge unsichtbar sind und nur sichtbar sind, wenn sie mit Ultraviolettstrahlung bestrahlt werden;
- die Gegenstände werden einer Anregung durch Ultraviolettstrahlung unterzogen;
- die Markierungen werden durch Nachweisen der durch diese Markierungen ausgesandten Lumineszenzstrahlung gelesen;
- die Gegenstände werden gemäß der Ablesung identifiziert.
